Europäisches Patentamt

European Patent Office

Office européen des brevets

(11) Numéro de publication: **0 233 792**
**B1**

(12) FASCICULE DE BREVET EUROPEEN

(45) Date de publication du fascicule du brevet: **14.03.90**

(21) Numéro de dépôt: **87400026.8**

(22) Date de dépôt: **08.01.87**

(51) Int. Cl.⁵: **B 64 C 27/51,** F 16 F 9/34,
F 16 F 13/00

(54) Contre-fiche de rappel élastique à amortissement incorporé, de type hydro-élastique.

(30) Priorité: **09.01.86 FR 8600208**

(43) Date de publication de la demande:
**26.08.87 Bulletin 87/35**

(45) Mention de la délivrance du brevet:
**14.03.90 Bulletin 90/11**

(84) Etats contractants désignés:
**DE GB IT**

(56) Documents cités:
**FR-A- 936 775**
**FR-A-1 260 067**
**FR-A-1 442 590**
**FR-A-2 063 969**

(73) Titulaire: **AEROSPATIALE Société Nationale**
**Industrielle**
**37, Boulevard de Montmorency**
**F-75781 Paris Cédex 16 (FR)**

(72) Inventeur: **Leman, Jean-Luc**
**Le Bel Ormeau, Bâtiment C3 Avenue J.P. Coste**
**F-13100 Aix en Provence (FR)**

(74) Mandataire: Lepeudry-Gautherat, Thérèse et al
**ARMENGAUD JEUNE CABINET LEPEUDRY 6,**
**rue du Fg. St-Honoré**
**F-75008 Paris (FR)**

Courier Press, Leamington Spa, England.

# Description

La présente invention se rapporte à une contre-fiche de rappel élastique à amortissement incorporé, de type hydro-élastique, destinée plus particulièrement, mais non uniquement, à l'équipement des rotors d'aérodynes, à voilure tournante, et plus spécialement des rotors d'hélicoptères.

Sur les rotors sustentateurs d'hélicoptères dont le moyeu est du type articulé et comporte en particulier pour chaque pale une articulation dite de trainée, articulation autour d'un axe perpendiculaire au plan de la pale et donnant donc à la pale un liberté d'oscillation angulaire dans le plan de rotation du rotor, il est bien connu qu'il est avantageux d'assurer autour de cette articulation un énergique rappel élastique de chaque pale vers sa position angulaire moyenne, de façon à pouvoir ajuster la fréquence propre de l'ensemble de la pale en trainée, et il est bien connu également qu'il est impératif d'amortir ces oscillations angulaires de trainée de la pale pour minimiser la transmission des efforts dynamiques de trainée provenant de la pale vers la structure de l'hélicoptère, tout en évitant toute instabilité pouvant naître des couplages entre les oscillations dues à des sollicitations aérodynamiques et les réponses mécaniques des éléments du rotor et du fuselage, tant pendant la montée et la descente en régime du rotor avant le décollage et après l'atterrissage, qu'en vol lorsque le rotor tourne en régime stabilisé.

On sait que les caractéristiques dynamiques de trainée d'une pale de rotor sustentateur d'hélicoptère dépendent de la valeur de son premier mode naturel de vibration en trainée, lequel est fonction, d'une part, du rappel centrifuge de la pale en trainée occasionné par la force centrifuge qui s'exerce radialement au centre de gravité de la pale et du rappel élastique en trainée additionnel apporté par tout dispositif, par exemple des câbles de tierçage ou des ressorts s'opposant élastiquement aux déplacements angulaires de la pale autour de sa position moyenne en trainée, et, d'autre part, de l'amortissement introduit dans les mouvements angulaires alternés de la pale autour de son articulation de trainée.

Pour obtenir un fonctionnement correct du rotor vis-à-vis de ces phénomènes dynamiques, les deux paramètres que sont la position de premier mode de trainée et l'amortissement doivent être ajustés mutuellement.

A ce jour, trois techniques différentes ont été utilisées pour obtenir l'ajustement des caractéristiques dynamiques de trainée, et à ces trois techniques différentes correspondent trois zones différentes d'un diagramme représentant, dans un repère orthogonal, l'amortissement (en ordonnée) en fonction de la raideur en trainée (en abscisse). Une première zone, en forme de bande délimitée entre l'axe des ordonnées et une demi-droite qui lui est parallèle, correspond à l'utilisation d'un amortisseur de trainée hydraulique articlé, d'un part, sur le moyeu du rotor et, d'autre part, sur le pied de la pale correspondante ou sur un organe de liaison, tel qu'une chape ou un manchon, reliant le pied de pale au moyeu, tandis que la composante de raideur ne provient que de l'effet centrifuge s'excerçant sur la pale. Une seconde zone, en forme de secteur angulaire délimité par un angle aigu entre l'axe des abscisses et une demi-droite issue du même point de cet axe que la demi-droite parallèle à l'axe des ordonnées et qui délimite la première zone, correspond à l'utilisation d'une contrefiche de rappel élastique du type viscoélastique à dissipation interne d'énergie, comprenant essentiellement une masse déformable d'un matériau visco-élastique qui est sollicitée en général en cisaillement entre deux supports rigides auxquels le matériau visco-élastique adhère et qui sont articulés l'un sur le moyeu et l'autre sur le pied de pale ou un organe de liaison du pied de pale au moyeu. L'angle aigu qui délimite cette zone en forme de secteur angulaire est limité, dans un montage de ce type, par des considérations de tenue en fatigue du matériau visco-élastique utilisé. La troisième zone est la zone délimitée entre les deux zones qui ont été présentées ci-dessus. Elle correspond à l'utilisation d'un amortisseur hydraulique et d'au moins un organe de rappel élastique. A titre d'exemple, sur les hélicoptères "ALOUETTE" de la Demanderesse, les organes de rappel élastique sont des câbles de tierçage liant les attaches de pale entre elles et qui, tendus sous l'effet de la force centrifuge, ramènent élastiquement les pales dans leur position angulaire moyenne.

Plus récemment, il a été proposé d'utiliser des contre-fiches de rappel élastique à amortissement incorporé, de type hydro-élastique, dont chacune est un équipement assurant simultanément le rappel élastique d'une pale en trainée par une masse d'un matériau déformable, et l'amortissement par un dispositif hydraulique plus précisemment, on a utilisé une telle contre-fiche telle que décrite dans le FR—A—1 260 067, correspondent aux caractéristiques selon le préambule de la revendication 1, qui comprend:

— deux organes rigides, munis chacun de moyens d'articulation destinés à relier l'un des organes rigides à une première pièce, telle qu'une pale ou un organe de liaison de ladite pale à un moyeu du rotor, et l'autre organe rigide à une seconde pièce, telle que ladit moyeu de rotor;

— au moins un organe de rappel élastique comprenant une masse d'un matériau déformable, solidaire des deux organes rigides et destiné à se déformer lorsque lesdits organes rigides sont déplacés l'un par rapport à l'autre, et à exercer sur lesdits organes rigides une action de rappel élastique tendant à les ramener dans une position relative initiale,

— au moins un amortisseur hydraulique, comprenant deux chambres de travail à volume variable en sens opposé, qui contiennent un fluide hydraulique relativement visqueux destiné à passer de l'une à l'autre des chambres par au moins un passage étranglé de communication entre lesdites chambres de travail, lorsque lesdits organes rigides sont déplacés l'un par rapport à l'autre, afin de produire un effet d'amortissement du déplacement relatif desdits organes rigides, et

— des moyens d'absorption des dilatations thermiques du fluide hydraulique.

Dans la contre-fiche de ce type, appelée également amortisseur de trainée ou adaptateur de fréquence, et qui est aussi décrite dans le brevet français no 2 528 382, la masse de matériau déformable est un anneau de matériau visco-élastique adhérant par ses deux faces frontales à deux plaques rigides boulonnées l'une à l'autre et sur une entretoise de manière à former l'organe rigide solidarisé à la pale, l'entretoise étant conformée en patte de fixation supportant une rotule de montage, tandis que le second organe rigide, monté sur le moyeu du rotor par une rotule, présente une partie de forme de plaque annulaire noyée dans l'épaisseur de l'anneau visco-élastique et autour de l'évidement central oblong de cet anneau, dans lequel est logé un élément de restriction délimitant, avec la paroi latérale de l'évidement central de l'anneau, les deux chambres de travail à volume variable en sens opposé, et deux passages étranglés de communication entre les deux chambres de travail. L'élément de restriction est formé par le boulonnage l'une contre l'autre des parties centrales sensiblement cylindriques de deux pièces rigides comportant chacune un flasque circulaire logé dans une ouverture de l'une des deux plaques rigides de l'organe lié à la pale, afin de fermer l'évidement central de l'anneau visco-élastique. Les moyens d'absorption des dilatations thermiques du fluide hydraulique sont logés dans l'élément de restriction et formés de deux paires de chambres internes contenant chacune une capsule manométrique, et les deux chambres de chaque paire sont reliées à un même canal étroit débouchant au niveau du col de l'un des deux passages étranglés de communication entre les deux chambres de travail. Dans l'amortisseur hydraulique ainsi constitué, l'anneau visco-élastique, qui ferme de manière étanche les deux chambres de travail, forme un piston qui commande, lorsque l'anneau visco-élastique est déformé par un dé placement relatif de la pale et du moyeu, le passage due fluide hydraulique d'une chambre de travail à l'autre par les deux passages étranglés.

L'expérimentation en vol, sur des hélicoptères de moyen tonnage, d'un rotor principal comportant un moyeu de nouvelle génération et équipé de contre-fiche de rappel élastique en trainée, de types visco et hydro-élastiques, tels que décrits dans le brevet français 2 528 382, a montré qu'il était souhaitable d'augmenter l'amortissement assuré par ces contre-fiches de rappel élastique pour couvrir correctement un domaine de vol élargi en masse et surtout en vitesse accessible à ces hélicoptères modernes équipés d'un moyeu de rotor de nouvelle génération. Mais l'augmentation de l'amortissement sur ces contre-fiches de rappel élastique conduit à une augmentation corrélative de leur raideur, qui est incompatible avec une tenue mécanique satisfaisante des moyens de fixation de ces contre-fiches sur le moyeu de rotor.

L'invention a pour but de remédier à cet inconvénient, et un objet de l'invention est de proposer une contre-fiche de rappel élastique à ammortissement incorporé, de type hydro-élastique, qui rassemble dans un même dispositif la fonction de rappel élastique de la pale en trainée, assurée par une masse de matériau élastiquemenet déformable, en caoutchouc naturel, synthétique ou de silicone, donnant la raideur en trainée, et la fonction d'amortissement, assurée par un amortisseur hydraulique, la contre-fiche selon l'invention permettant d'ajuster la fréquence propre en trainée de la pale correspondante et son amortissement sur ce mode, c'est-à-dire les caractéristiques dynamiques de trainée de la pale.

A cet effet, la contre-fiche selon l'invention, du type présente ci-dessus, se caractérise en ce que la masse de matériau déformable de l'organe de rappel élastique est un manchon cylindrique de matériau élastique formant également joint de fermeture de l'amortisseur hydraulique ledit manchon étant adhérisé de façon étanche par ses deux surfaces interne et externe entre deux tronçons tubulaires métalliques coaxiaux suivant l'axe général du dispositif et solidaires chacun de l'un des deux organes rigides de sorte que ladite masse travaille uniquement en cisaillement, en ce que la chambre de compensation est ménagée entre, d'une part, un fond du cylindre adjacent à une chambre de travail traversée par la tige et d'autre part, une face latérale du manchon élastique cylindrique et la face latérale interne du tronçon tubulaire interne et en ce que l'organe de compensation est logé dans un canal de compensation, dont chacune des deux extrémités est en communication permanente avec l'une des deux chambres de travail et dont une portion sensiblement centrale est en communication permanente avec la chambre de compensation par l'intermédiaire d'un conduit de compensation.

Dans un tel dispositif, dès que les deux organes rigides sont déplacés l'un par rapport à l'autre, en raison d'un mouvement angulaire de la pale en traînée, l'organe rigide solidaire de la tige de piston vient solliciter simultanément le composant élastique, c'est-à-dire la masse déformable, et le piston de l'amortisseur hydraulique, de sorte que les deux fonctions recherchées sont simultanément remplies.

Avantageusement, le passage étranglé de communication entre les deux chambres de travail est un passage ménagé dans le piston et dans lequel est monté un organe de restriction, ce qui simplifie la réalisation de la contre-finche en permettant d'éviter de devoir percer le cylindre et de prévoir au moins une tubulure externe au cylindre et renfermant un organe de restriction, de sorte que simultanément les moyens d'étranglement sont protégés dans le cylindre, et la compacité du dispositif est minimale.

Afin d'obtenir un fonctionnement satisfaisant à la fois au régime nominal de rotation du rotor, en vol, et à basse fréquence, lors du lancement ou de l'arrêt du rotor, lorsque la vitesse de rotation du rotor croise la première fréquence naturelle de la pale en trainée, la contre-fiche comprend de plus au moins un clapet de surpression, mais de préférence deux clapets, dont chacun est monté dans un canal de communication entre les deux chambres de travail, et est destiné à autoriser un écoulement de fluide hydraulique de celle des chambres de travail qui est mise sous pression, lorsque le piston est déplacé dans le cylindre, vers l'autre chambre de travail, en dépression, dès que la pression différentielle entre les deux chambres de travail dépasse un seuil donné. Dans une telle contre-fiche, l'organe de restriction peut être dimensionné pour assurer un amortissement suffisant pour éviter le phénomène d'instabilité dit de rèsonance-sol, tandis que les clapets de surpression peuvent être tarés pour éviter le développement en vol d'efforts inutilement élevés.

Pour les mêmes avantages de simplicité de réalisation, de protection des organes sensibles et de compacité réduite qui ont été présentés cidessus, à propos de la disposition des moyens d'étranglement, il est avantageux que l'un au moins des clapets de surpression, mais de préférence chacun d'eux, soit monté dans un canal ménagé dans le piston.

Dans un premier mode avantageux de réalisation, remarquable par la simplicité de sa structure, l'organe de compensation est un clapet double, comportant deux obturateurs mobiles dont chacun coopère avec l'un de deux sièges contre lequel il est appliqué de manière étanche par la pression régnant dans l'une des deux chambres de travail, lorsque cette chambre est mise sous pression par un déplacement du piston dans le cylindre, tandis que l'autre obturateur est écarté de son siège, afin que l'autre chambre de travail soit mise en communication avec la chambre de compensation.

De plus, la masse de matériau déformable est avantageusement une masse élastiquement déformable qui est réguliérement répartie autour de l'axe du cylindre, entre deux supports auxquels elle adhère et qui sont coaxiaux autour dudit axe du cylindre et solidaires chacun de l'un des deux organes rigides, de sorte que la masse élastiquement déformable puisse simultanément remplir une fonction de palier de guidage axial de la tige et du piston. En outre, la masse élastiquement déformable est montée en joint de fermeture étanche de la chambre de compensation, entre ses deux supports.

Afin d'éviter le frottement du piston dans le cylindre, le guidage axial est complété par un palier de guidage de la tige qui est monté dans le fond du cylindre adjacent à la chambre de travail traversée par la tige.

Pour éviter d'éventuels problèmes liés aux variations du volume d'expansion dans la chambre de compensation, un trou de mise à l'air libre de la chambre de compensation est avantageusement percé dans l'un des deux organes rigides, et cette mise à l'air libre est fermée par un bouchon lors des manutentions et du stockage de la contre-fiche. Enfin, pour faciliter le contrôle d'un état de remplissage suffisant de la chambre de compensation en fluide hydraulique, un voyant de niveau de fluide est monté sur l'une des deux organes rigides et au moins partiellement en regard d'un perçage débouchant dans la chambre de compensation.

D'autres avantages et caractéristiques de l'invention ressortiront de la description donnée ci-après, à titre non limitatif, de deux exemples de réalisation, en référence aux dessins annexés sur lesquels:

la figure 1 est une vue schématique en coupe longitudinale d'un premier exemple de contre-fiche selon l'invention,

la figure 2 est une vue schématique d'une partie de la contre-fiche de la figure 1, représentée partiellement en coupe selon un plan de coupe différent de celui de la figure 1,

la figure 3 est un vue analogue à celle de la figure 2 selon encore un autre plan de coupe,

la figure 4 est une vue en coupe longitudinale d'un second exemple de contre-fiche selon l'invention.

la figure 5 est une vue partielle du second exemple avec arrachement et en coupe selon un plan différent de celui de la figure 4, et

la figure 6 est une vue partielle en coupe et à plus grande échelle d'un portion du second exemple selon la figure 4.

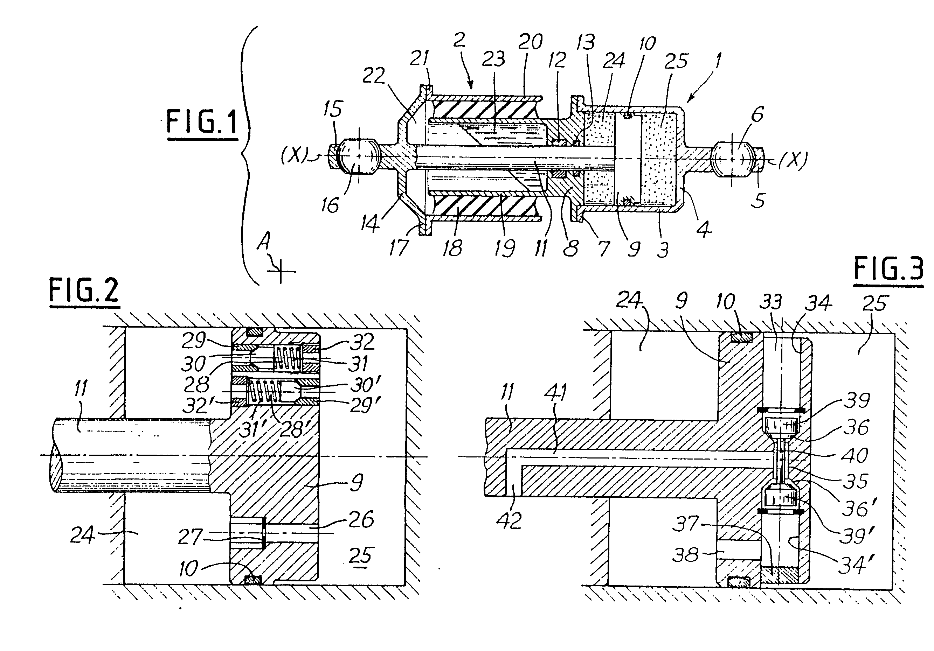

La contre-fiche de rappel élastique à amortissement incorporé qui est représentée sur la figure 1 comprend essentiellement un amortisseur hydraulique 1 et un ressort de rappel élastique 2 montés en série. L'amortisseur 1 comporte un cylindre métallique 3, de section circulaire, fermé à une extrémité axiale par un fond 4 qui est d'une seule pièce avec le cylindre 3 et qui porte, en saillie vers l'extérieur du cylindre 3 et dans le prolongement axial de ce dernier, une patte de fixation 5 dans laquelle est montée une rotule 6 d'articulation de la contre-fiche sur le pied d'une pale de rotor (non représenté) ou sur un manchon ou une chape (également non représenté) de liaison du pied de pale au moyeu. A son autre extrémité axiale, le cylindre 3 présente und bride radiale périphérique 7, en saillie vers l'extérieur, par laquelle le cylindre 3 est solidarisé avec étanchéité, de manière usuelle, par exemple à l'aide d'une couronne d'ensembles vis-écrous (non représentés), à un fond 8 partiellement emmanché dans le cylindre 3 et percé d'un passage central coaxial au cylindre 3 autour de son axe XX. L'amortisseur 1 comporte également un piston 9, monté coulissant axialement avec étanchéité dans le cylindre 3, grâce à un joint d'étanchéité torique 10 logé dans une gorge périphérique ménagée dans la piston 9 et s'ouvrant radialement vers l'extérieur. Le piston 9 est solidaire d'une extrémité axiale d'un tige 11 qui traverse le passage central du fond 8 en étant guidée axialement et avec étanchéité' dans ce dernier grâce respectivement à un palier lisse et autolubrifiant 12 et à un joint d'étanchéité torique 13, montés dans des logements annulaires ménagés dans le fond 8 et débouchant radialement vers l'intérieur, dans le passage central de ce dernier. Le piston 9 et la tige 11 présentent des caractéristiques particulières de structure interne qui seront plus précisément décrites ci-dessous en référence aux figures 2 et 3. A son autre extrémité axiale, la tige 11 est d'une seule pièce avec la partie centrale d'un flasque 14 sensiblement en forme d'assiette radiale et portant, du côté opposé à la tige 11 et dans le prolongement axial de cette dernière, un patte de fixation 15 dans laquelle est montée une rotule 16 d'articulation de la contre-fiche sur le moyeu du rotor, non représenté et dont seul le point central a été indiqué en A. Le flasque 14 en forme d'assiette radiale présente sa concavité tournée vers l'amortisseur 1, et son bord libre est conformé en bride périphérique radiale 17, en saillie vers l'extérieur, et par laquelle le flasque 14 est solidarisé au ressort 2. Le ressort 2 comporte un manchon 18 de caoutchouc naturel ou synthétique, par exemple de silicone, qui est réalisé par moulage et se déforme élastiquement en cisaillement entre deux tronçons tubulaires 19, 20 rigides, par exemple métalliques, de forme cylindrique à section circulaire, et coaxiaux entre eux et au cylindre 3 autour de l'axe XX. Ainsi, le manchon de caoutchouc 18 adhère par toute sa surface cylindrique interne et par toute sa surface cylindrique externe respectivement à la surface cylindrique externe du tronçon tubulaire interne 19, qui est d'une seule pièce le fond 8 de l'amortisseur 1 et prolonge coaxialement la partie périphérique de ce fond 8 due côté opposé au cylindre 3, et à la surface cylindrique interne du tronçon tubulaire externe 20, dont l'extrémité axiale du côté du flasque 14 présente und bride périphérique radiale et externe 21, solidarisée de maínère étanche à la bride 17 du flasque 14 par une couronne d'ensembles vis-écrous et un joint d'étanchéité approprié (non représentés). Le tronçons tubulaires 19 et 20, le flasque 14 et le manchon de caoutchouc 18 délimitent ainsi une chambre interne 22, partiellement remplie d'un volume d'un liquide hydraulique 23, et fermée de manière étanche par le manchon de caoutchouc 18 qui fait office de joint d'étanchéité entre les tronçons tubulaires 19 et 20. Cette chambre interne 22 est appelée chambre de compensation ou d'équilibrage dans la suite du présent mémoire, pour des raisons qui seront expliquées ci-dessous dans la description du fonctionnement de ce dispositif. Dans le cylindre 3, le piston 9 délimite et sépare deux chambres de travail 24 et 25, remplies du même liquide hydraulique que celui contenu dans la chambre de compensation 23, et telles que le volume de l'une augmente tandis que le volume de l'autre diminue, lorsque le piston 9 est déplacé axialement dans le cylindre 3. Les deux chambres de travail 24 et 25 sont reliées l'une à l'autre par plusieurs canaux, dont l'un contient un organe d'étranglement, et dont deux autres contiennent chacun un clapet de supression qui s'ouvre lorsque la pression différentielle entre les deux chambres de travail dépasse un seuil prédéterminé, l'un des clapets de surpression s'ouvrant pour autoriser uniquement le passage du liquide hydraulique de la chambre 24 vers la chambre 25, tandis que l'autre s'ouvre pour autoriser uniquement le passage du liquide hydraulique de la chambre 25 vers la chambre 24. De plus, chacune des deux chambres 24 et 25 est reliée à la chambre de compensation 23 par un canal de compensation. Ces différents canaux peuvent être ménagés dans l'épaisseur du cylindre 3, du fond 8 et du tronçon tubulaire 19, ou être délimités dans des canalisations externes au cylindre 3 et au tronçon tubulaire 19 mais reccordées à ces organes. Cependant, pour d'évidentes raisons de simplification et de compacité de la structure et de protection de ces canaux, dans l'exemple représenté sur la figure 1 et comme décrit ci-dessous en référence aux figures 2 et 3, ces canaux et les moyens qu'ils contiennent sont au moins partiellement logés dans le piston 9. Sur la moitié inférieure de la figure 2, on a représenté un canal d'étranglement 26, percé axialement au travers du piston 9, et dans lequel est logé un diaphragme 27 assurant une restriction du flux s'écoulant de celle des chambres 24 et 25 dont le volume diminue et qui est mise en pression par un déplacement du piston 9, vers l'autre chambre, en dépression et dont le volume augmente. Par cette restriction et le laminage du liquide traversant le diaphragme 27, on assure, comme dans tous les amortisseurs hydrauliques classiques, une dissipation d'énergie, et donc un amortissement du mouvement de déplacement du piston 9. Dans la moitié supérieure de la figure 2, on a représenté deux canaux axiaux de même diamètre 28 et 28' qui traversant également le piston 9 et dont chacun loge un clapet de surpression comprenant un siège, un obturateur mobile, un ressort d'application de l'obturateur sur le siège, et une butée d'appui du ressort. Le clapet de surpression logé dans le canal 28 a son siège 29 en forme de tronçon tubulaire retenu dans l'extrémité du canal 28 qui débouche dans la chambre 24, et dont l'extrémité vers la chambre 25 forme un siège tronconique proprement dit, divergeant vers la chambre 25. L'obturateur 30 correspondant est un tronc de cylindre terminé par un tronc de cône convergeant vers la chambre 24, et repoussé par le ressort de compression 31 contre le siège 29, en position de fermeture étanche, et le ressort 31 prend appui contre la butée 32, qui est tubulaire et filetée sur sa surface latérale externe, et qui est vissée dans un taraudage de l'extrémité du canal 28 qui débouche dans la chambre 25. Le tarage du ressort 31 est tel que l'obturateur 30 est écarté de son siège 29 dès que la surpression qui est développée dans la chambre 24 par un déplacement du piston 9 vers la gauche sur la figure 2, est supérieure à un seuil donné. Le siège 29', l'obturateur 30', le ressort 31' et la butée 32' du clapet de surpression logé dans le canal 28' sont respectivement identiques aux organes analogues du clapet du canal 28, mais montés en position inversée, afin que l'obturateur 30' soit écarté de son siège 29' dès que la surpression développée dans la chambre 25 par déplacement de piston 9 vers la droite sur la figure 2, atteint le seuil prédéterminé correspondent au tarage du ressort 31'. L'ouverture des clapets par écartement des obturateurs 30 et 30' de leurs sièges 29 ou 29' respectifs, à l'encontre du ressort de rappel 31 ou 31' correspondant, permet un écoulement de liquide de la chambre en surpression vers la chambre en dépression, dès que la pression différentielle atteint un seuil critique. De plus, comme la tige 11 traverse la chambre 24, les deux chambres 24 et 25 ont des sections efficaces différentes. De ce fait, lorsque le piston 9 est déplacé vers la droite sur les figures 1 à 3, du liquide s'écoule de la chambre 25 dans la chambre 24 en passant par le canal 26 et le diaphragme 27 et, éventuellement, par le clapet de surpression du canal 28', mais comme la diminution du volume de la chambre 25, mise sous pression, est supérieure à l'augmentation du volume de la chambre 24, en dépression, il faut évacuer un excès de liquide du cylindre 3. Inversement, si le piston 9 est déplacé vers la gauche sur les figures 1 à 3, du liquide s'écoule de la chambre 24, mise en pression, vers la chambre 25, en dépression, en passant par le canal 26 et le diaphragme 27, et, éventuellement, par le clapet de surpression logé dans le canal 28. Mais comme la diminution du volume de la chambre 24 est inférieure à l'augmentation du volume de la chambre 25, il faut admettre un complément de liquide dans cette dernière pour éviter la formation de cavitations. L'évacuation de cet excès de liquide et l'admission de ce complément de liquide sont assurées par un circuit d'équilibrag ou de compensation qui est représenté sur la figure 3. Ce circuit comprend un conduit de compensation ménagé dans la tige 11, un canal de compensation ménagé dans le piston 9 et un double clapet de compensation logé dans le canal de compensation. Ce dernier est constitué d'un passage transversal 33, percé perpendiculairement à l'axe du cylindre 3 dans la partie du piston 9 qui est adjacente à la chambre 25 et qui coulisse avec un jeu radial dans le cylindre 3, et ce passage 33 présente deux alésages d'extrémité 34 et 34', de grand diamètre, séparés par un alésage central du plus petit diamètre 35, auquel ils se raccordent chacun par un siège tronconique 36 our 36'. A l'une de ses extrémités radiales, le passage 33 débouche directement dans la chambre 25 (en haut sur la figure 3) par l'alésage 34, tandis que son autre extrémité radiale (en bas sur la figure 3) est obturée par un bouchon 37 monté dans l'alésage 34', mais le passage 33 communique avec la chambre 24 par un perçage axial 38 débouchant dans l'alésage 34' correspondant, au voisinage du bouchon 37. Le double clapet de compensation comprend deux obturateurs 39 et 39', chacun en forme de tronc de cylindre monté avec du jeu radial dans l'alésage 34 ou 34' correspondant, et se terminant en tronc de cône de forme complémentaire à celle du siège 36 ou 36', et les deux obturateurs 39 et 39' sont reliés l'un à l'autre par une tige 40 d'une longeur telle que chacun des obturateurs 39 et 39' est écarté de son siège 36 ou 36' lorsque l'autre obturateur est appliqué contre son siège. Le conduit de compensation comprend un perçage axial 41 qui s'étend dans la tige 11 et débouche axialement à une extrémité dans l'alésage central 35 du passage 33, et, à son autre extrémité, dans la chambre de compensation 23 par un petit perçage radial 42, situé à une distance suffisante du piston 9 pour que ce perçage 42 débouche toujours dans la chambre 23, même lorsque le piston 9 est déplacé dans le cylindre 3 en positon maximale vers la droite sur la figure 3.

Le dispositif dont on vient de décrire la structure en référence aux figures 1 à 3, fonctionne de la manière suivante: à partir d'une position initiale de repos, dans laquelle la contre-fiche participe au maintien de la pale dans une position telle que l'axe longitudinal de cette dernière s'étend dans un plan radial par rapport au centre A du rotor, si la pale est déplacée dans son plan de rotation, c'est-à-dire en trainée, du fait des efforts de provenance dynamique et aérodynamiques, les articulations 6 et 16 liées respectivement à la pale et au moyeu sont déplacées l'une par rapport à l'autre le long de l'axe XX de la contre-fiche qui s'étend dans le plan de rotation de la pale. Ce déplacement relatif des articulations 6 et 16 a pour effet d'entraîner une sollicitation simultanée du manchon élastique en caoutchouc 18 et du piston 9, puisque de tronçon tubulaire 20 et la tige 11 sont solidaires du flasque 14, lié à la rotule 16, tandis que le tronçon tubulaire 19 et le cylindre 3 sont solidaires de la patte 5 liée à la rotule 6. En réaction à la sollicitation en cisaillement subie par le manchon élastique 18, ce dernier exerce un rappel élastique tendant à ramener le dispositif en position initiale. Simultanément, un amortissement du mouvement de déplacement relatif des rotules 6 et 16 est assuré par déplacement du liquide hydraulique entre les chambres de travail 24 et 25 de l'amortisseur 1, du fait du déplacement du piston 9 dans le cylindre 3, et par l'intermediaire de la restriction formée par le diaphragme 27 dans le canal d'étranglement 26. Ce diaphragme 27, qui fonctionne comme un gicleur, est d'une taille, en particulier au niveau de son orifice de passage, qui est déterminée pour assurer un amortissement suffisant afin d'éviter le phénomène de résonance-sol. Par exemple, pour pouvoir équiper le rotor d'un hélicoptère de moyen tonnage, de 9 tonnes de masse totale au décollage, construit par la Demanderesse, la taille du diaphragme 27 d'une telle contre-fiche est déterminée pour assurer un amortissement suffisant à la vitesse de rotation pour laquelle risque d'apparaître une instabilité dite de résonance-sol, aux environs de 1 Hz. Les deux clapets de surpression qui sont logés dans les canaux 28 et 28' (figure 2) permettent de limiter les différences de pression entre les deux chambres 24 et 25, ce qui est nécessaire pour obtenir un fonctionnement satisfaisant à la fois à basse fréquence (dans une

configuration où risque d'apparaître ce phénomène de résonance-sol, comme évoqué ci-dessus) et au régime nominal de rotation du rotor en vol. Ces clapets de surpression ou de décharge ont pour fonction d'éviter la création d'efforts dynamiques inutilement élevés, appliqués sur la contre-fiche, en vol, au régime nominal de rotation du rotor, par exemple pour une fréquence de 4,5 Hz sur l'hélicoptère de moyen tonnage cité précédemment. Les différences entre les variations de sens opposé des volumes des chambres de travail 24 et 25, lorsque le piston 9 est déplacé dans le cylindre 3, sont compensées ou équilibrées dans la chambre de compensation 22, qui constitue la troisième chambre de l'amortisseur hydraulique, par l'intermédiaire du circuit de compensation, et en particulier de son double clapet logé dans le passage transversal 33. En effet, si le piston 9 est déplacé vers la droite sur les figures 1 à 3, la chambre 25 est comprimée et le volume chassé de la chambre 25 vers la chambre 24 par le canal 26 et le diaphragme 27 et, éventuellement, par le clapet de surpression logé dans le canal 28', est supérieur au volume dont la chambre 24 a augmenté. Mais, sous l'effet de la pression régnant dans la chambre 25, et qui s'applique par l'alésage 34 sur l'obturateur 39, ce dernier est appliqué de manière étanche sur son siège 36. En conséquence l'obturateur 39' est écarté de son siège 36', de sorte que la chambre 24 est mise en communication par les passages 38, 34', 35 et 41 avec la chambre de compensation 22, dans lequel le liquide en excédant est ainsi transféré. Inversement, si le piston 9 est déplacé vers la gauche sur les figures 1 à 3, la chambre 24 est comprimée et le volume de liquide chassé de la chambre 24 vers la chambre 25 par le canal 26 et le diaphragme 27 et, éventuellement, par le clapet de surpression logé dans le canal 28, est inférieur au volume dont la chambre 25 a augmenté, de sorte que cette chambre 25 est en dépression. La pression régnant dans la chambre 24 s'applique par le perçage 38 et l'alésage 34' sur l'obturateur 39' ainsi appliqué avec étanchéité sur son siège 36'. En consequence l'obturateur 39 est écarté de son siège 36 et la chambre 25, ainsi mise en communication avec la chambre 22 par l'alésage 34, le passage 35 et le conduit 41, 42, reçoit par aspiration un complément de liquide s'écoulant de la chambre 22 à la chambre 25. Le circuit de compensation permet ainsi une circulation de liquide entre les trois chambres 22, 24 et 25, ce qui a pour avantages supplémentaires, d'une part, que la chambre de compensation 22, qui n'est pas complètement remplie de liquide, joue la fonction d'une chambre d'absorption des dilatations thermiques du liquide contenu dans les chambres de travail 24 et 25, et, d'autre part, que d'éventuelles bulles d'air, qui viendraient à se former dans l'une des chambres de travail en dépression, peuvent parvenir dans la chambre 22, grâce au champ des forces centrifuges auquel le liquide est soumis lorsque le rotor tourne. C'est pour obtenir ce second avantage que la contre-fiche est montée de sorte que l'amortisseur 1 soit situé du côté de la pale et le ressort 2 du côté du moyeu, et c'est la raison pour laquelle la surface libre du volume de liquide 23 contenu dans la chambre 22 est représentée sur la figure 1 comme étant une surface inclinée, perpendiculaire à la direction radiale par rapport au centre A du rotor. Afin de faciliter la purge des bulles d'air éventuelles dans l'une des chambres de travail, le diaphragme 27 et le canal 26 sont positionnés en face de la zone probable d'accumulation des bulles d'air, c'est-à-dire en face de la partie supérieure de la chambre 24, de façon à orienter le jet de liquide sur cette zone, lorsque le piston 9 est déplacé vers la droite. Le volume de liquide 23 contenu dans la chambre 22 est ajusté pour satisfaire les deux conditions suivantes:

— le point d'aspiration du perçage 42 dans la chambre 22 doit toujours être immergé, à l'arrêt du rotor, au sol, lorsque le niveau de liquide 23 dans cette chambre 22 est sensiblement horizontal, et en vol, lorsque le rotor tourne, et que le niveau de liquide 23 est perpendiculaire au champ des forces centrifuges, qui est environ 50 fois plus important que le champ de la gravité.

— le volume de liquide 23 contenu dans la chambre 22 doit être suffisamment faible pour que la pression du volume d'air comprimé dans cette chambre 22 reste acceptable, lorsque l'amortisseur 1 est en position de rétraction maximale (piston 9 au maximum vers la droite dans le cylindre 3) et que le liquide est chaud, mais il faut simultanément que le volume de liquide 23 soit suffisant pour qu'en extension maximale de l'amortisseur 1 (pistion 9 au maximum vers la gauche dans le cylindre 3), la dépression du volume d'expansion 23 ne crée pas de problèmes de cavitation dans le liquide.

La raideur du ressort formé par le manchon élastique 18, réalise en un matériau chimiquement compatible avec le liquide utilisé, est choisie pour obtenir un fonctionnement convenable du dispositif dans la configuration où risque d'apparaître le phénomène de résonance-sol, et cette raideur permet également au manchon élastique 18 de limiter les mouvements de la pale lorsque le rotor ne tourne pas. Comme la contre-fiche est montée de sorte que son axe longitudinal XX est incliné sur la direction radiale, les efforts centrifuges qui s'exercent sur la contre-fiche se décomposent en une composante axiale et en une composante transversale. La composante axiale est à l'origine de la sollicitation similtanée de l'amortisseur 1 et du ressort 2, et la structure de la contre-fiche est prévue pour résister à la composante transversale. Pour cela, le guidage de la tige 11 et du piston 9 par rapport au cylindre 3 et au fond 8 de l'amortisseur 1 est assuré non seulement par le palier 12, logé dans le fond 8, mais également par le manchon élastique 18, dont la raideur radiale est suffisamment élevée pour qu'il puisse être utlisé comme second palier, de sorte que l'on évite les frottements du piston 9 contre le cylindre 3.

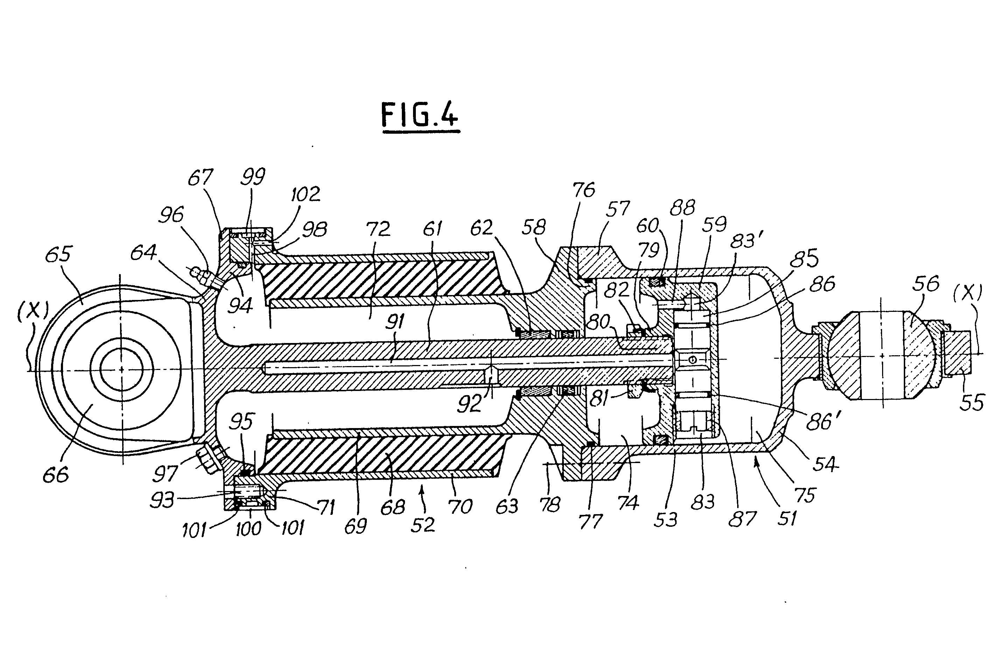

La contre-fiche, représentée sur les figures 4, 5 et 6, est un exemple pratique de réalisation de l'invention.

On retrouve un amortisseur hydraulique 51, dont le cylindre 53 est fermé d'un côté par un fond 54 portant une patte de fixation 55 équipée d'une rotule 56, et, de l'autre côté, par la fixation de sa bride 57 contre un fond 58 sur lequel la bride 57 est centrée autour d'une collerette 76 munie d'un joint d'étanchéité torique 77, l'assemblage étant assuré par huit vis d'axe 78 réparties sur la pérphérie. Le piston 59 de l'amortisseur 51 est, comme précédemment, fixé à l'extrémité de la tige 61, guidée par le palier lisse 62 et passant dans le joint d'étanchéité torique 63 qui sont logés dans le fond 58 et la tige est solidaire du flasque 64 portant la patte de fixation 65 équipée de la rotule 66.

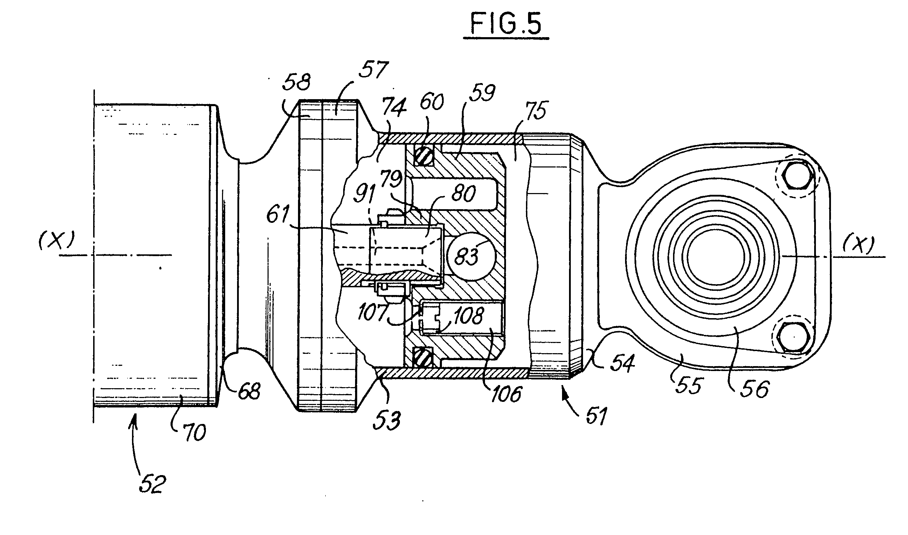

Le piston 59 comporte, tel que représenté sur la figure 5, un canal d'étranglement 106 percé au travers de piston 59 fileté dans lequel est logé un diaphragme 107 retenu par un écrou creux 108 assurant une restriction du flux s'écoulant de celle des chambres 74 et 75 dont le volume diminue et qui est mise en pression par un déplacement du piston 59 vers l'autre chambre, en dépression et dont le volume augmente.

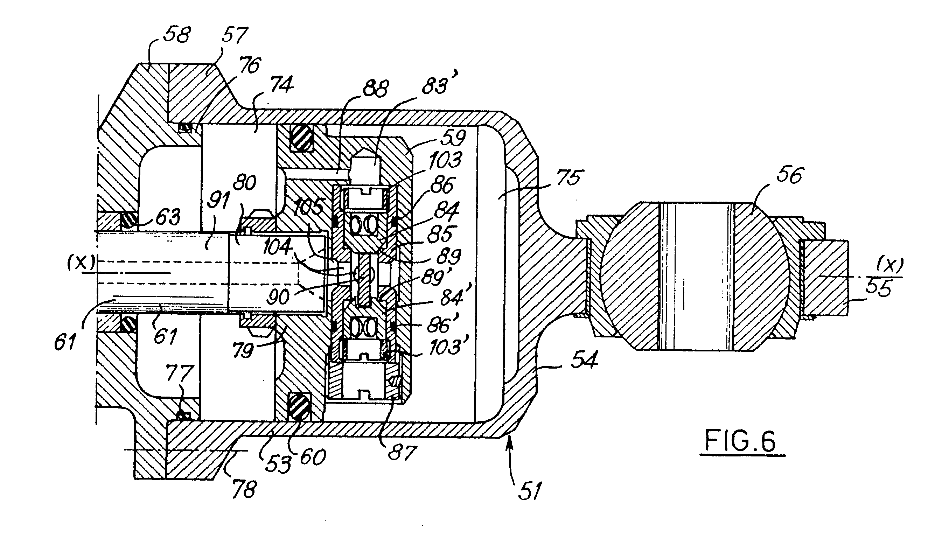

Le piston 59 et la tige 61 comportent également, comme représenté sur la figure 4 et en coupe sur la figure 6, un circuit de compensation. Ce circuit comprend un conduit de compensation ménagé dans la tige 61, un canal de compensation ménagé dans le piston 59 et un double clapet de compensation logé dans le canal de compensation. Ce dernier est constitué d'un passage cylindrique transversal 83 percé perpendiculairement à l'axe du cylindre 53 dans la partie du piston 59 qui est adjacente à la chambre 75 et qui coulisse avec un jeu radial dans le cylindre 53, et ce passage borgne 83 est prolongé par un alésage de plus petit diamètre 83' dans lequel débouche un trou 88 d'axe parallèle à l'axe longitudinal XX et qui met en communication l'alésage 83' avec la chambre 74. Dans l'alésage 83 est logé un organe tubulaire constituant le double clapet de compensation. Cet organe tubulaire de compensation, représenté sur la figure 6, comporte un corps cylindrique 85, logé dans l'alésage 83 avec une étanchéité assurée par deux joints toriques 86 et 86' mis en place dans des gorges correspondantes du corps cylindrique 85, lequel est retenu dans l'alésage 83 par un écrou creux 87 vissé dans un filetage pratiqué à l'extrémité de l'alésage 83.

Le double clapet de compensation logé à l'intérieur du corps cylindrique 85 comprend deux obturateurs 84 et 84', chacun en forme de cône de forme complémentaire à celle des sièges 89 et 89' et les deux obturateurs 84 et 84' sont reliés l'un à l'autre par une tige 90 d'une longueur telle que chacun des deux obturateurs 84 et 84' est écarté de son siège 89 ou 89' lorsque l'autre obturateur est applique contre son siège. Deux écrous creux 103 et 103' vissés dans des taraudages partiqués à chaque extrémité du corps cylindrique 85 maintiennent en place les deux obturateurs 84 et 84' avec un jeu suffisant pour leur libre débattement entre les deux sièges coniques 89 et 89'.

Le corps cylindrique 85 comporte dans sa partie centrale deux perçages axiaux 104 qui débouchent dans une gorge circulaire 105 en communication permanente avec le conduit axial 91 percé dans la tige 61 et débouchant dans la chambre de compensation 72 par le perçage radial 92 pratiqué à la partie inférieure de la tige 61.

De plus, dans cet exemple, le piston 59 comporte un moyeu taraudé 79 par lequel il est vissé sur l'extrémité filetée 80 de la tige 61 et serré par un contre-écrou 81 préalablement vissé sur la tige 61 avec interposition d'une rondelle repliée 82 pour empêcher le desserrage.

Le piston 59 comprend également des clapets de surcharge du type de ceux logés dans les canaux 28 et 28' de l'exemple précédent (voir figure 2), mais qui n'ont pas été représentés sur les figures 4 à 6 afin de ne pas surcharger le dessin.

Cette contre-fiche comporte également un ressort de rappel, comprenant un manchnon de caoutchouc 68, qui se déforme élastiquement et qui est moulé entre un tronçon tubulaire interne 69, solidaire du fond 58, et un tronçon tubulaire externe 70 fixé par sa bride 71 contre la bride 67 du flasque 64, à l'aide de dix vis 93, en étant centré autour d'une collerette axiale 94 présentée par le flasque 64 et munie d'un joint d'étanchéité torique 95, afin de délimiter une chambre de compensation 72 qui est étanche et partiellement remplie de liquide hydraulique. Dans cet exemple, un bouchon 96 est monté amovible dans une ouverture de remplissage percée dans la partie supérieure du flasque 64, et un bouchon de vidange 97 est monté amovible dans une ouverture de vidange percée dans la partie inférieure de ce flasque 64.

De plus, un dispositif de contrôle du remplissage en liquide hydraulique de la chambre de compensation 72 est constitué par une gorge annulaire 99 ménagée dans la bride 94 et fermée par une couronne 100 en matière plastique transparente, qui est appliquée contre deux joints d'étanchéité toriques 101, logés de part et d'autre de la gorge 99 de façon à constituer un voyant muni d'un repère visualisant le niveau du liquide hydraulique. Ce dispositif de contrôle du remplissage est alimenté par un trou radial (non représenté) percé à la partie inférieure de la bride 71 entre le manchon élastique 68 et la collerette 94 et met en communication la chambre 72 et la gorge annulaire 99.

En outre, pour éviter d'éventuels problèmes liés aux variations notamment d'origine thermique du volume de liquide contenu dans la chambre 72, un perçage axial 102 pratiqué dans la partie supérieure de la bride 71 et débouchant d'une part dans un trou radial 98 percé dans la bride 71 entre le manchon élastique 68 et la collerette 94 et débouchant vers l'intérieur dans la chambre 72 et vers l'extérieur dans la gorge 99, et d'autre part à l'extérieur de la contre-fiche, forme une mise à l'air libre qui peut être fermée par oun bouchon (non représenté) pendant le stockage et les manutentions de la contre-fiche.

Le fonctionnement de cette contre-fiche est sensiblement identique à celui du dispositif présenté schématiquement sur le figures 1 à 3.

On obtient ainsi, un dispositif aussurant le rappel élastique d'une pale en traînée par un manchon élastique en caoutchouc, et l'amortissement des mouvements en traînée de la pale par un amortisseur hydraulique ayant une chambre de compensation des variations de volume des deux chambres de travail et d'absorption des dilatations thermiques due liquid hydraulique, cette chambre de compensation étant fermée de manière étanche au liquide hydraulique vers l'extérieur par le manchon élastique lui-même. On peut ainsi régler les caractéristiques dynamiques de traînée de la pale en réglant le rappel élastique et la raideur de la liaison à l'aide du manchon élastique, et l'amortissement introduit à l'aide de l'amortisseur hydraulique.

## Revendications

1. Contre-fiche de rappel élastique à amortissement incorporé, de type hydro-élastique, en particulier pour une pale d'un rotor d'aérodyne à voilure tournante, et comprenant:
— deux organes rigides (5, 15) muis chacun de moyens d'articulation (6, 16) destinés à relier l'un des organes rigides (5) à une première pièce, telle qu'une pale ou un organe de liaison de ladite pale à un moyeu du rotor, et l'autre organe rigide (15) à une seconde pièce, telle que ledit moyeu de rotor;
— au moins un organe de rappel élastique (2) comprenant une masse (18) d'un matériau déformable, solidaire des deux organes rigides (5, 15) et destiné à se déformer lorsque lesdits organes rigides sont déplacés l'un par rapport à l'autre, et à exercer sur lesdits organes rigides une action de rappel élastique tendant à les ramener dans une position relative initiate;
— au moins un amortisseur hydraulique (1) comprenant deux chambres de travail à volume variable en sens opposé (24, 25), qui contiennent un fluide hydraulique relativement visqueux destiné à passer de l'une à l'autre des chambres par au moins un passage étranglé (26, 27) de communication entre lesdites chambres de travail lorsque lesdits organes rigides sont déplacés l'un par rapport à l'autre, afin de produire un effet d'amortissement du déplacement relatif desdits organes rigides, ledit amortisseur comprenant un cylindre (6) porté par l'un des organes rigides et dans lequel les deux chambres de travail sont délimitées et un piston (9) monté coulissant aixalement et avec étanbchéité dans un cylindre (3) en séparant l'une de l'autre les deux chambres de travail, une tige (5) d'axe longitudinal parallèle à l'axe du cylindre solidarisant le piston à l'autre organe rigide, en traversant l'une au moins des chambres de travail;
— une chambre de compensation (22) contenant un volume (23) de fluide hydraulique et un volume de gaz constituant lesdits moyens d'absorption des dilatations thermiques du fluide hydraulique et destinée de plus à compenser la différence entre les variations de volume de deux chambres de travail (24, 25) qui est due à la tige (11) lorsque le piston (9) est déplacé dans le cylindre (3);
— un organe de compensation (34, 34', 35, 36, 36', 39, 39', 40) qui permet un écoulement de fluide hydraulique de l'une des chambres de travail vers le chambre de compensation lorsque le piston est déplacé dans un sens et un écoulement de fluide hydraulique de la chambre de compensation vers une chambre de travail lorsque le piston est déplacé dans l'autre sens dans le cylindre, et
— des moyens d'absorption de dilatations thermiques du fluide hydraulique (22); caractérisée en ce que la masse (18) de matériau déformable de l'organe de rappel élastique (2) est un manchon cylindrique (18) de matériau élastique formant également joint de fermeture de l'amortisseur hydraulique (1) ledit manchon (18) étant adhérisé de façon étanche par ses deux surfaces interne et externe entre deux tronçons tubulaires métalliques (19, 20) coaxiaux suivant l'axe général (XX) du dispositif et solidaires chacun de l'un des deux organes rigides (5, 15), de sorte que ladite masse (18) travaille uniquement en cisaillement, en ce que la chambre de compensation (22) est ménagée entre, d'une part, und fond (8) du cylindre (3) adjacent à une chambre de travail (24) traversée par la tige (11) et d'autre part, une face latérale du manchon élastique cylindrique (18) et la face latérale interne du tronçon tubulaire interne (19) et en ce que l'organe de compensation (39), 39', 40) est logé dans un canal de compensation (33), percé dans le piston (9), ce canal de compensation étant à chacune des deux etrémités (34, 34', 38) en communication permanente avec l'une des deux chambres de travail (24, 25) et dont une portion sensiblement centrale (35) est en communication permanente avec la chambre de compensation (22) par l'intermédiaire d'un conduit de compensation (41, 42) s'étendant dans la tige (11) du piston.

2. Contre-fiche selon la revendication 1, caractérisée en ce que ledit passage étranglé de communication entre les deux chambres de travail (24, 25) est un passage (26) ménagé dans le piston (9) et dans lequel est monté un organe de restriction 27.

3. Contre-fiche selon l'une des revendications 1 et 2, caractérisée en ce qu'elle comprend de plus, au moins un clapet de surpression (29, 30, 31, 32) monté dans un canal (28) de communication entre les deux chambres de travail (24, 25) et destiné à autoriser un écoulement de fluide hydraulique de celle (25) des chambres de travail qui est mise sous pression, lorsque le piston (9) est déplacé dans le cylindre (3), vers l'autre chambre de travail en dépression (24), dès que la pression différentielle entre les deux chambres de travail dépasse un seuil donné.

4. Contre-fiche selon la revendication 3, caractérisée en ce que l'un au moins des clapets de surpression (29, 30, 31, 32) est monté dans un canal (28) ménagé dans le piston (9).

5. Contre-fiche selon la revendication 1, caractérisée en ce que l'organe de compensation est un clapet double comportant deux obturateurs mobiles (39, 39') dont chacun coopère avec l'un de deux sièges (36, 36') contre lequel il est appliqué de manière étanche par la pression régnant dans l'une des deux chambres de travail lorsque cette chambre est mise sous pression par un déplacement du piston (9) dans le cylindre (3), tandis que l'autre obturateur est écarté de son siège afin que l'autre chambre de travail soit en communication avec la chambre de compensation (22).

6. Contre-fiche selon la revendication 1, caractérisée en ce que le canal de compensation (33) est ménagé dans le piston (59), et le conduit de compensation (41, 42) s'étend dans la tige (11) du piston (9).

7. Contre-fiche selon l'une des revendications 1 à 6, caractérisée en ce qu'elle comprend un palier (12) du guidage de la tige (11) qui est monté dans un fond (8) du cylindre (3) adjacent à une chambre de travail (24) traversée par la tige (11).

8. Contre-fiche selon l'une des revendications 1 à 7, caractérisée en ce qu'un trou (98, 102) de mise à l'air libre de la chambre de compensation (72) est percé dans l'un des deux organes rigides (64, 65, 70) à sa partie supérieure.

9. Contre-fiche selon l'une des revendications 1 à 8 caractérisée en ce qu'un voyant (99) de niveau d'huile est monté sur l'un des deux organes rigides (64, 65, 70) et au moins partiellement en regard d'un perçage débouchant dans la partie inférieure de la chambre de compensation (72).

**Patentansprüche**

1. Elastisch rückstellende Verstrebung mit einem eingebauten hydroelastischen Dämpfer, insbesondere für ein Rotoblatt eines drehflügelbetriebenen Luftfahrzeuges, bestehend aus:

— zwei starren Einrichtungen (5, 15), jedes mit gelenkigen Miteln (6, 16) versehen, die zur Verbindung einer der starren Einrichtungen (5) mit einem ersten Teil, wie einem Blatt oder einer Einrichtung zur Verbindung des Blattes mit einer Rotornabe, und der anderen starren Einrichtung (15) mit einem zweiten Teil, wie der Rotornabe, dienen;

— wenigstens einer elastisch rückstellenden Einrichtung (2), welche eine Masse (18) aus verformbarem Material enthält, die mit beiden starren Einrichtungen (5, 15) fest verbunden und dazu vorgesehen ist, sich zu verformen, wenn die starren Einrichtungen gegeneinander verschoben werden und eine elastische Rückstellkraft auf diese starren Einrichtungen auszuüben, die so gerichtet ist, daß diese in eine anfängliche Position relativ zueinander zurückgeführt werden;

— wenigstens einem hydraulischen Dämpfer (1), welcher zwei Arbeitskammern (24, 25) mit gegensinnig veränderlichem Volumen besitzt, die eine hydraulische, verhältnismäßig zähe Flüssigkeit enthalten, welche dazu dient, von einer Kammer in die andere durch wenigstens einen engen, die Arbeitskammern verbindenden Kanal (26, 27) zu strömen, wenn die starren Einrichtungen gegeneinander verschoben werden, um dadurch einen Dämpfungseffekt für die relative Verschiebung der starren Einrichtungen hervorzurufuen, wobei der Dämpfer einen Zylinder (6) besitzt, der von einer der starren Einrichtungen getragen wird, wobei die beiden Arbeitskammern in diesem Dämpfer festgelegt sind und ein Kolben (9) axial verschiebbar und dicht in einem Zylinder (3) angeordnet ist, der die beiden Arbeitskammern voneinander trennt, und wobei eine Stange (11) mit einer parllel zur Achse des Zylinders verlaufenden Längsachse den Kolben fest mit der anderen starren Einrichtung verbindet und dabei wenigstens durch eine der Arbeitskammern geführt ist;

— einer Kompensationkammer (22), welche ein Hydraulikflüssigkeitsvolumen (23) und ein Gasvolumen zum Ausgleich der Wärmeausdehnung der hydraulischen Flüssigkeit beinhaltet, welches darüber hinaus dazu dient, die Differenz zwischen den Volumenänderungen der beiden Arbeitskammern (24, 25) zu kompensieren, die von der Stange (11) verursacht wird, sobald der Kolben (9) im Zylinder (3) verschoben wird;

— einer Kompensationseinrichtung (35, 34', 35, 36, 36', 39, 39', 40), welche ein Abfließen von hydraulischem Fluid aus einer der Arbeitskammern in die Kompensationskammer gestattet, wenn der Kolben in der einen Richtung verschoben wird, und ein Abfließen von hydraulischem Fluid aus der Kompensationskammer in eine der Arbeitskammern gestattet, wenn der Kolben in der anderen Richtung im Zylinder verschoben wird, und

— Mitteln zur Absorption von Wärmeausdehnungen der hydraulischen Flüssigkeit (22), dadurch gekennzeichnet, daß die aus verformbaren Material bestehende Masse (18) der elastisch rückstellenden Einrichtung (2) eine auch einen abdichtenden Verschluß des hydraulischen Dämpfers (1) bildende Zylinderhülse (18) aus elastischem Material ist, die mit ihren zwei Oberflächen innen und außen dicht an zwei röhrenförmigen, zur Hauptachse (XX) der Einrichtung koaxialen, metallischen Abschnitten (19, 20) haftet, von denen jeder mit einer der beiden starren Einrichtungen (5, 15) in der Weise verbunden ist, daß die Masse (18) nur aufgrund einer Scherwirkung arbeitet, daß die Kompensationskammer (22) zwischen einerseits einem Boden (18) des Zylinders (3), der an eine von der Strange (11) durchquerte Arbeitskammer (24) angrenzt, und andererseits einer Seitenfläche der elastischen Zylinderhülse (18) und der inneren Seitenfläche des inneren röhrenförmigen Abschnittes (19) angeordnet ist und daß sich die Kompensationseinrichtung (39, 39', 40) in einem Kompensationskanal (33) befindet, der in den Kolben (9) gebohrt ist, wobei dieser Kompensationskanal an jedem seiner zwei Enden (34, 34', 38) in einer ständigen Verbindung mit einer der beiden Arbeitskammern (24, 25) steht und dessen im wesentlichen mittlerer Teil (35) in ständiger Verbindung mit der Kompensationskammer (22) über eine dazwischen befindliche Kompensationsleitung (41, 42) steht, welche in der Stange (11) des Kolbens verläuft.

2. Verstrebung nach Anspruch 1, dadurch gekennzeichnet, daß der enge Verbindungskanal zwischen den beiden Arbeitskammern (24, 25) ein Kanal (26) ist, der in dem Kolben (9) angeordnet ist und in dem eine Drosseleinrichtung (27) angebracht ist.

3. Verstrebung nach Anspruch 1 oder 2, dadurch gekennzeichnet, daß sie wenigstens ein Überdruckventil (29, 30, 31, 32) besitzt, welches in einem Verbindungskanal (28) zwischen den beiden Arbeitskammern (24, 25) angebracht ist und dazu dient, ein Abfließen hydraulischer Flüssigkeit aus derjenigen Arbeitskammer (25), die unter Druck steht, wenn der Kolben (9) im Zylinder (3) verschoben wird, in die andere Arbeitskammer (24), in der Unterdruck herrscht, zu ermöglichen, sobald der Druckunterschied zwischen den beiden Arbeitskammern einen vorgegebenen Schwellwert überschreitet.

4. Verstrebung nach Anspruch 3, dadurch gekennzeichnet, daß wenigstens eines der Überdruckventile (29, 30, 31, 32) in einem Kanal (38) angebracht ist, der in dem Kolben (9) angeordnet ist.

5. Verstrebung nach Anspruch 1, dadurch gekennzeichnet, daß die Kompensationseinrichtung ein Doppelventil its, das zwei bewegliche Verschlüsse (39, 39') besitzt, von denen jeder mit einem von zwei Sitzen (36, 36') zusammenwirkt, wobei er jeweils dicht gegen diesen durch den Druck angedrückt ist, der in einer der zwei Arbeitskammern herrscht, sobald diese Kammer durch eine Verschiebung des Kolbens (9) in dem Zylinder (3) unter Druck steht, wohingegen sich der andere Verschluß von seinem Sitz entfernt, wodurch die andere Arbeitskammer in Verbindung mit der Kompensationskammer (22) steht.

6. Verstrebung nach Anspruch 1, dadurch gekennzeichnet, daß der Kompensationskanal (33) in dem Kolben (59) angeordnet ist und die Kompensationsleitung (41, 42) in der Stange (11) des Kolbens (9) verläuft.

7. Verstrebung nach einem Ansprüche 1 bis 6, dadurch gekennzeichnet, daß sie ein Lager (12) zur Führung der Stange (11) besitzt, welches in einem Boden (8) des Zylinders (3) angebracht ist, der an eine von der Stange (11) durchquerte Arbeitskammer (24) angrenzt.

8. Verstrebung nach einem Ansprüche 1 bis 7, dadurch gekennzeichnet, daß in den oberen Teil einer der starren Einrichtungen (64, 65, 70) ein die Kompensationskammer (72) mit der Außenluft verbindendes Loch (98, 102) gebohrt ist.

9. Verstrebung nach einem Ansprüche 1 bis 8, dadurch gekennzeichnet, daß ein Ölstandsschauglas (99) an einer der beiden starren Einrichtungen (64, 65, 70) und wenigstens teilweise gegenüber einer Bohrung angeordnet ist, die in den unteren Teil der Kompensationskammer (72) mündet.

## Claims

1. An elastic return strut with a built-in damper of the hydro-elastic type, in particular for a blade of a rotor of an aerodyne having a rotary wing, comprising:

— two rigid members (5, 15) each provided with hinge means (6, 16) for connecting one of the rigid members (5) to a first part, such as a blade or a member for connecting said blade to a hub of the rotor, and connecting the other rigid member (15) to a second part such as said rotor hub;

— at least one elastic return member (2), comprising a mass (18) of deformable material which is integral with the two rigid members (5, 15) and is intended to become deformed when said rigid members are displaced with respect to one another and to exert on said rigid members an elastic return force to return them to a relative initial position;

— at least one hydraulic damper (1) comprising two working chambers (24, 25) having a volume variable in opposite senses, which contain a relatively viscous hydraulic fluid intended to pass from one chamber to the other by at least one narrow communication passage (26, 27) between said working chambers when said rigid members are displaced with respect to one another, in order to produce a damping effect on the relative displacement of said rigid members, said damper comprising a cylinder (6) which is carried by one of the rigid members and in which the two working chambers are defined, and a piston (9) is axially sealingly slidingly mounted in a cylinder (3) and separates one working chamber from the other, a rod (11) having a longitudinal axis which is parallel to the axis of the cylinder joining the piston to the other rigid member while passing through at least one of the working chambers;

— a compensating chamber (22) containing a volume (23) of hydraulic fluid and a volume of gas comprising said means for absorbing the thermal expansion of the hydraulic fluid and also intended to compensate the difference in variations in volume between the two working chambers (24, 25), which is due to the rod (11) when the piston (9) is displaced in the cylinder (3);

— a compensating member (34, 34', 35, 36, 36', 39, 39', 40) which allows hydraulic fluid to flow from one of the working chambers to the compensating chamber when the piston is displaced in the cylinder in one direction and hydraulic fluid to flow from the compensating chamber to a working chamber when the piston is displaced in the cylinder in the other direction; and

— means for absorbing thermal expansion of the hydraulic fluid (22), characterised in that the mass (18) of deformable material of the elastic return member (2) is a cylindrical sleeve (18) made of elastic material, which also forms a closing joint for the hydraulic damper (1), said sleeve (18) being stuck in a sealed manner by its two internal and external surfaces between two metallic tubular lengths (19, 20) which are coaxial along the general axis (XX) of the device, each of which being integral with one of the two rigid members (5, 15) such that said mass (18) operates in a shearing manner only, the compensating chamber (22) being disposed between on the one hand a base (8) of the cylinder (3) adjacent to a working chamber (24) through which the rod (11) passes, and, on the other, a lateral face of the cylindrical elastic sleeve (18) and the internal lateral face of the internal tubular length (19), and the compensating membert (39, 39', 40) is disposed in a compensating duct (33) which is made in the piston (9), each of the two ends (34, 34', 38) of which duct is in permanent communication with one of the two operating chambers (24, 25) and a substantially central portion (35) of which is in permanent communication with the compensating chamber (22) by way of a compensating duct (41, 42) in the rod (11) of the piston.

2. A strut as claimed in claim 1, characterised in that said narrow communication passage between the two working chambers (24, 25) is a passage (26) provided in the piston (9) and a restricting member (27) is mounted therein.

3. A strut as claimed in either claim 1 or claim 2, characterised in that it further comprises at least one pressure relief valve (29, 30, 31, 32) mounted in a communication passage (28) between the two working chambers (24, 25) and being intended to allow hydraulic fluid to flow from the working chamber (25), which is subjected to pressure when the piston (9) is displaced in the cylinder (3), to the other working chamber (24), which is under negative pressure as soon as the differential pressure between the two working chambers exceeds a given threshold.

4. A strut as claimed in claim 3, characterised in that at least one of the pressure relief valves (29, 30, 31, 32) is mounted in a passage (28) formed in the piston (9).

5. A strut as claimed in claim 1, characterised in that the compensating member is a double valve comprising two mobile stops (39, 39'), each of which cooperates with one of the the two seats (36, 36') against which it is pressed in a sealing manner by the pressure prevailing in one of the two working chambers when said chamber is put under pressure by a displacement of the piston (9) in the cylinder (3), while the other stop is removed from its seat in order for the other working chamber to communicate with the compensating chamber (22).

6. A strut as claimed in claim 1, characterised in that the compensating passage (33) is disposed in the piston (59) and the compensating duct (41, 42) is in the rod (11) of the piston (9).

7. A strut as claimed in any of claims 1 to 6, characterised in that it comprises a bearing (12) for guiding the rod (11), which is mounted in a base (8) of the cylinder (3) adjacent to a working chamber (24) through which the rod (11) passes.

8. A strut as claimed in any of claims 1 to 7, characterised in that a hole (98, 102) for connecting the compensating chamber (72) to the open air is made in the upper part of one of the two rigid members (64, 65, 70).

9. A strut as claimed in any of claims 1 to 8, characterised in that an oil level indicator (99) is mounted on one of the two rigid members (64, 65, 70) at least partially facing a bore which opens into the lower part of the compensating chamber (72).

FIG.1

FIG.2

FIG.3

EP 0 233 792 B1

FIG.4

FIG.5

EP 0 233 792 B1

FIG.6

4